(19) Europäisches Patentamt / European Patent Office / Office européen des brevets

(11) **EP 4 458 887 A1**

(12) **EUROPEAN PATENT APPLICATION**
published in accordance with Art. 153(4) EPC

(43) Date of publication:
**06.11.2024 Bulletin 2024/45**

(21) Application number: **22915704.5**

(22) Date of filing: **13.12.2022**

(51) International Patent Classification (IPC):
**C08J 5/18** *(2006.01)*  **B32B 27/32** *(2006.01)*

(52) Cooperative Patent Classification (CPC):
**B32B 27/32; C08J 5/18**

(86) International application number:
**PCT/JP2022/045790**

(87) International publication number:
**WO 2023/127480 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.12.2021 JP 2021215026**

(71) Applicant: **Prime Polymer Co., Ltd.
Tokyo 104-0028 (JP)**

(72) Inventor: **SEKIYA Keiko
Ichihara-shi, Chiba 299-0108 (JP)**

(74) Representative: **J A Kemp LLP
80 Turnmill Street
London EC1M 5QU (GB)**

(54) **FILM COMPOSED OF ETHYLENE-ALPHA-OLEFIN COPOLYMER**

(57) An object of the present invention is to obtain a film further excellent in strength, low-temperature sealability, and blocking resistance, and the present invention relates to a film comprising an ethylene/α-olefin copolymer (A) having the following requirements (a1), (a2), and (a3).

(a1): the melt flow rate (MFR) measured at 190°C and a load of 2.16 kg is in a range of 0.1 to 8 g/10 minutes,
(a2): a density is in a range of 885 to 915 kg/m$^3$, and
(a3): a melt tension is in a range of 40 to 190 mN.

**EP 4 458 887 A1**

**Description**

[Technical Field]

The present invention relates to a film composed of an ethylene/α-olefin copolymer excellent in low-temperature sealability and blocking resistance.

[Background Art]

Films composed of polyolefin resins such as polyethylene resins and polypropylene resins have been widely used as various packaging materials.
Among them, an ethylene/α-olefin copolymer is used as a heat-sealing layer (thermally fused layer) for packaging materials due to its lower melting point compared to that of a polypropylene resin.
When the ethylene/α-olefin copolymer is used for a film, in order to prevent blocking, the copolymer is known to be added with an anti-blocking agent composed of an inorganic compound such as silica or zeolite, or a slip agent composed of a fatty acid amide. In a case in which the ethylene/α-olefin copolymer is compounded with the anti-blocking agent, it has problems such as variation in effectiveness due to uneven dispersion of the anti-blocking agent and increased costs, and further has applications where use of the anti-blocking agent is not desirable from the standpoint of content hygiene. Therefore, a film excellent in blocking resistance without use of the anti-blocking agent is desired.
As a technology to improve blocking resistance without containing an anti-blocking agent, a specific ethylene/α-olefin copolymer or a film composed of an ethylene/α-olefin copolymer, has been proposed (for example, Patent Literatures 1 to 3).

[Citation List]

[Patent Literature]

    [Patent Literature 1] WO2013/099927
    [Patent Literature 2] JP2013-112797A
    [Patent Literature 3] JP2018-178015A

[Summary of Invention]

[Technical Problem]

Conventionally, when packaging films are used to produce, for example, bag-like products, heat sealability and low-temperature heat sealability in particular may be required. In order to achieve favorable low-temperature heat sealability, it is essentially necessary to use a linear low-density polyethylene with a low melting point. In this case, however, its blocking resistance is known to become extremely poor. Thus, there is a trade-off relationship between the blocking resistance and the low-temperature heat sealability, making it difficult to simultaneously achieve sufficient effects. Moreover, impact resistance for protecting contents and appropriate transparency for design may be required.
An object of the present invention is to obtain a film excellent in impact resistance as well as favorable in transparency, low-temperature sealability and blocking resistance.

[Solution to Problem]

Accordingly, the present invention relates to the following [1] to [6].

    [1] A film comprising an ethylene/α-olefin copolymer (A) having the following requirements (a1), (a2), and (a3):

        (a1): the melt flow rate (MFR) measured at 190°C and a load of 2.16 kg is in a range of 0.1 to 8 g/10 minutes,
        (a2): a density is in a range of 885 to 915 kg/m$^3$, and
        (a3): a melt tension is in a range of 40 to 190 mN.

    [2] The film according to the item [1], having an external haze of 4.4% or more and less than 15%.
    [3] The film according to the item [1] or [2], having a film thickness in a range of 0.005 mm to 1 mm.

[4] A laminate comprising the film according to the item [1] or [2].

[5] A packaging material comprising the film according to the item [1] or [2] or the laminate according to the item [4] .

[6] A method for producing a film by melt extruding an ethylene/α-olefin copolymer (A) having the following requirements (a1), (a2), and (a3):

(a1): the melt flow rate (MFR) measured at 190°C and a load of 2.16 kg is in a range of 0.1 to 8 g/10 minutes,

(a2): a density is in a range of 885 to 915 kg/m$^3$ and

(a3): a melt tension is in a range of 40 to 190 mN.

[Advantageous Effects of Invention]

The film of the present invention has excellent impact resistance (dart impact), heat seal strength development temperature is low, resulting in excellent low-temperature heat sealability, and is also favorable in transparency (haze) and blocking resistance, and therefore a packaging bag composed of the film used also has a beautiful appearance in a heat-sealed portion of the film. The film is also excellent in low-temperature heat sealability, making it possible to accelerate a filling rate to a packaging material using the film.

[Description of Embodiments]

<Ethylene/α-olefin copolymer (A)>

The ethylene/α-olefin copolymer (A) forming the film of the present invention (hereinafter may be referred to as the "copolymer (A)") is a copolymer of ethylene and an α-olefin, having the following requirements (a1), (a2) and (a3).

<Requirement (a1>

The melt flow rate (MFR, 190°C, 2.16 kg load) measured in accordance with JIS K 7210 is in a range of 0.1 to 8 g/10 minutes, preferably 0.3 to 5 g/10 minutes and more preferably 1 to 4 g/10 minutes.

The copolymer (A) according to the present invention, satisfying that MFR falls within the above range, provides favorable film formability and the resulting film has favorable mechanical properties.

<Requirement (a2)>

The density measured in accordance with JIS K7112 is in a range of 885 to 915 kg/m$^3$, preferably 890 to 914 kg/m$^3$ and more preferably 900 to 914 kg/m$^3$.

The film obtained from the copolymer (A) according to the present invention satisfying that the density falls within the above range, is excellent in low-temperature sealability and blocking resistance.

<Requirement (a3)>

The melt tension (190°C) is in a range of 40 to 190 mN, preferably 62 to 160 mN, and more preferably 71 to 140 mN.

The film obtained from the copolymer (A) according to the present invention satisfying that the melt tension falls within the above range is excellent in blocking resistance, strength and transparency, and the copolymer (A) according to the present invention satisfying that the melt tension falls within the above range is excellent in membrane formation stability.

The melt tension (190°C) [mN] of the copolymer (A) in the present invention was determined by measuring a stress when a molten filament of the copolymer (A) was stretched at a constant rate. A capillary rheometer: CAPILOGRAPH 1B manufactured by Toyo Seiki Seisaku-sho, Ltd. was used for the measurements. The conditions were as follows: resin temperature 190°C, melting time 6 minutes, barrel diameter 9.55 mmcφ, extrusion speed 15 mm/min, winding speed 24 m/min (when the molten filament was broken, winding speed was reduced with an increment of 5 m/min), nozzle diameter 2.095 mmφ, and nozzle length 8 mm.

The α-olefin constituting the ethylene/α-olefin copolymer (A) according to the present invention is usually an α-olefin having 3 to 20 carbon atoms and preferably 6 to 10 carbon atoms. Examples of the α-olefin having 3 to 20 carbon atoms include propylene, 1-butene, 1-hexene, 4-methyl-1-pentene, 1-octene, and 1-decene. Among them, 1-hexene is preferred.

The copolymer (A) according to the present invention may be a single copolymer or a combination of two or more copolymers thereof. In the case of a copolymer of two or more types thereof, the composition (mixture) needs to satisfy the above requirements (a1), (a2) and (a3).

The ethylene/$\alpha$-olefin copolymer (A) according to the present invention may contain biomass-derived monomers (ethylene and $\alpha$-olefin). The monomer constituting the copolymer (A) may be a biomass-derived monomer singly, or may contain both a biomass-derived monomer and a fossil fuel-derived monomer. The biomass-derived monomer is a monomer composed of all renewable natural raw materials and their residues, such as those derived from plants or animals, including fungi, yeast, algae, and bacteria, and contains a $^{14}C$ isotope at a proportion of approximately $10^{-12}$ in terms of carbon, wherein the biomass carbon concentration (pMC) measured in accordance with ASTM D 6866 is approximately 100 (pMC). The biomass-derived monomer is obtained by conventionally known methods.

The ethylene/$\alpha$-olefin copolymer (A) according to the present invention containing a biomass-derived monomer is preferred from the viewpoint of reducing an environmental load. In a case in which polymer production conditions such as a polymerization catalyst and polymerization temperature are the same, even though a raw material olefin contains a biomass-derived olefin, the molecular structure other than containing a $^{14}C$ isotope at a proportion of approximately $10^{-12}$, is the same as that of an ethylene/$\alpha$-olefin copolymer composed of a fossil fuel-derived monomer. Therefore, the performance is said to remain unchanged.

The ethylene/$\alpha$-olefin copolymer (A) according to the present invention may contain a monomer derived from chemical recycling (ethylene and $\alpha$-olefin). The monomer constituting the copolymer may be a monomer derived from chemical recycling singly, or may include the monomer derived from chemical recycling and a fossil fuel-derived monomer and/or a biomass-derived monomer. The monomer derived from chemical recycling can be obtained by conventionally known methods.

The ethylene/$\alpha$-olefin copolymer (A) according to the present invention containing a monomer derived from chemical recycling, is preferable from the viewpoint of reduction of environmental load (mainly reduction of wastes). Even though a raw material monomer contains a monomer derived from chemical recycling, the monomer derived from chemical recycling is a monomer in which a polymer such as a waste plastic is depolymerized or thermally decomposed followed by returned to a monomer unit such as ethylene, as well as a monomer produced by using the obtained monomer as a raw material, and therefore in a case in which polymer production conditions such as a polymerization catalyst, polymerization process and polymerization temperature are the same, the molecular structure is the same as that of an ethylene/$\alpha$-olefin copolymer composed of a fossil fuel-derived monomer. Therefore, the performance is said to remain unchanged.

The ethylene/$\alpha$-olefin copolymer (A) according to the present invention can also be selected from commercially available ethylene/$\alpha$-olefin copolymers, which satisfy the above requirements (a1), (a2) and (a3) and used.

<<Production method of ethylene/$\alpha$-olefin copolymer (A)>>

The ethylene/$\alpha$-olefin copolymer (A) according to the present invention, satisfying the above requirements (a1), (a2) and (a3), can be produced by polymerizing ethylene and the aforementioned $\alpha$-olefin in the presence of an olefinic polymer production catalyst.

For polymerization of ethylene and an $\alpha$-olefin, liquid-phase polymerization methods such as solution polymerization and suspension polymerization, or a vapor-phase polymerization methods are employed.

The olefinic polymer production catalyst is not particularly limited, and examples thereof include conventionally known catalysts such as a Ziegler catalyst, a Phillips catalyst, and a metallocene catalyst, but the polymer is preferably produced by the method using the metallocene catalyst.

<Film>

The film of the present invention is a film containing the above ethylene/$\alpha$-olefin copolymer (A) according to the present invention.

To the copolymer (A) constituting the film of the present invention may be added, if necessary, additives such as a weather stabilizer, a heat stabilizer, an antistatic agent, an anti-slip agent, an anti-blocking agent, an antifogging agent, lubricant, a pigment, a dye, a nucleating agent, a plasticizer, an anti-aging agent, a hydrochloric acid absorbent, an antioxidant, and a nucleating agent, to the extent that they do not impair the purpose of the present invention.

In the case of addition of these additives, various known methods for mixing each additive, for example, with a Henschel mixer, V-blender, ribbon blender, and tumbler blender, and then melt kneading it by a single screw extruder, twin screw extruder, kneader, and Banbury mixer, for example, followed by granulation or pulverization of the molten product, and a method of, for example, dry blending or blending by an auto-feeder without prior melt kneading, can be employed.

The copolymer (A) can also be mixed with other thermoplastic resin and used to the extent that it does not impair the effect of the present invention.

<Other thermoplastic resin>

Crystalline thermoplastic resins such as a polyolefin (excluding the copolymer (A)), polyamide, polyester, and polyacetal; and non-crystalline thermoplastic resins such as a polystyrene, acrylonitrile/butadiene/styrene copolymer (ABS), polycarbonate, polyphenylene oxide, and polyacrylate, are used. A polyvinyl chloride can also be preferably used.

The film (also including a sheet depending on a thickness of the film) of the present invention is excellent in low-temperature heat sealability and is particularly suitable as a sealant layer for packaging materials. Therefore, it can be applied to a bag-like packaging material as a single layer or as an inner layer of a laminate.

The film of the present invention is excellent in dart impact even when used as a single layer film, making it possible to provide a film difficult to tear. The film of the present invention has a dart impact strength (dart impact) of 1,000 g or more and the blocking coefficient of 100 mN/cm or less as measured in accordance with ASTM D1893-67, and is therefore excellent in blocking resistance.

<<Production method of film>>

The film of the present invention is obtained by subjecting the copolymer (A) according to the present invention to T-die film molding or inflation molding (air-cooling, water-cooling, multi-stage cooling, and high-speed processing).

The film of the present invention can be used even in a single layer, but can be formed in a multilayer film to further impart various functions. Examples of the method used in this case include a co-extrusion method (for example, co-extrusion with a barrier resin (for example, an EVOH or polyamide)) in each of the aforementioned molding methods. On the other hand, a method of lamination with paper or a barrier film (for example, an aluminum foil, vapor deposited film, or coating film), which is difficult to be co-extruded, by laminated lamination methods such as extrusion lamination or dry lamination method, is included. In short, when obtaining a laminate (lamination film) in which at least one surface layer is formed of a layer composed of the copolymer (A) of the present invention, as a means of stacking the layer composed of the copolymer (A) of the present invention on a substrate, such methods can be employed.

In order to impart barrierability of the laminate, a barrier layer (for example, a vapor deposited film) may be provided on a surface layer of the film of the present invention. The vapor deposited film may be composed of metal or inorganic oxide.

Examples of metal constituting a metal vapor deposited film include, for example, aluminum, chromium, tin, nickel, copper, silver, gold, and platinum. Examples of a metal oxide include an aluminum oxide, silicon oxide, magnesium oxide, calcium oxide, zirconium oxide, titanium oxide, boron oxide, hafnium oxide, and barium oxide.

<Laminate>

The laminate of the present invention is a film including the ethylene/$\alpha$-olefin copolymer (A) according to the present invention, and is stacked with the following substrate layer.

<Substrate layer>

Examples of the substrate layer constituting the laminate of the present invention include various materials normally used as packaging materials, for example, polyolefin films such as a polyethylene film, polypropylene film, polybutene film, and polymethylpentene film, polyester films such as a polyethylene terephthalate film and polycarbonate film, thermoplastic resin films such as a nylon film, polystyrene film, polyvinyl chloride film, polyvinylidene chloride film, polyvinyl alcohol film, ethylene/vinyl alcohol copolymer film, polymethyl methacrylate film, and ethylene/vinyl acetate copolymer film, an aluminum foil, and paper. These substrate layers composed of these thermoplastic resin films may be non-stretched films, or uniaxially or biaxially stretched films, and the number of these substrate layers may be one layer or two or more layers.

In order to improve adhesiveness of one or both sides of the substrate layer with a film including the ethylene/$\alpha$-olefin copolymer (A) of the present invention, the substrate may have been subjected to surface activation treatment such as corona treatment, flame treatment, plasma treatment, undercoat treatment, primer coating treatment, and flame treatment. A thickness of the substrate layer is usually in a range of 5 to 1,000 $\mu$m and preferably in the range of 9 to 100 $\mu$m.

The film and laminate of the present invention have excellent low-temperature heat sealability and excellent dart impact strength (dart impact), as well as blocking resistance and transparency, for example, making it possible to obtain a package in which a heat-sealed portion thereof has a beautiful appearance, and by taking advantage of these characteristics, the film and laminate are therefore also suitable for a liquid packaging bag, liquid soup packaging bag, liquid paper carton, original fabric for lamination, special shaped liquid packaging bag (for example, a standing pouch), standard bag, heavy bag, wrap film, sugar bag, oil packaging bag, and packaging materials (standard bags, those for automatic packaging) for snacks other than the above foods, such as candies, rice crackers, chocolate sweets, and chocolates, luxury grocery items such as delicacies, processed meat products such as ham, sausage, and meat, and daily necessities such as socks and cosmetics.

[Examples]

The present invention will be described in more detail below based on Examples, but the present invention is not limited to these Examples. It is noted that the various properties of the copolymer and film obtained in each Example were measured and evaluated as follows.

The polymers used in Examples and Comparative Examples are shown below.

[Ethylene/α-olefin copolymer (A)]

(1) Ethylene/α-olefin copolymer (A-1)

As the ethylene/α-olefin copolymer (A-1), an ethylene/1-hexene copolymer commercially available from Prime Polymer Co., Ltd. [MFR = 1.8 g/10 minutes, density = 910 kg/m$^3$, and melt tension = 104 mN (trade name: Evolue SP0820)] was used.

(2) Ethylene/α-olefin copolymer (A-2)

As the ethylene/α-olefin copolymer (A-2), an ethylene/α-olefin copolymer (A-2) with MFR = 1.9 g/10 minutes, density = 910 kg/m$^3$, and melt tension = 83 mN, composed of 80 parts by mass of ethylene/1-hexene copolymer commercially available from Prime Polymer Co., Ltd. [MFR = 1.8 g/10 minutes, density = 910 kg/m$^3$, and melt tension = 104 mN (trade name: Evolue SP0820)], and 20 parts by mass of ethylene/1-hexene copolymer commercially available from Prime Polymer Co., Ltd. [MFR = 2.1 g/10 minutes, density = 909 kg/m$^3$, and melt tension = 10 mN (trade name: Evolue SP1020)], was used.

[Ethylene/α-olefin copolymer (E)]

(1) As the ethylene/α-olefin copolymer (E-1), an ethylene/1-hexene copolymer commercially available from Prime Polymer Co., Ltd. [MFR=2.3 g/10 minutes, density=916 kg/m$^3$, and melt tension = 70 mN (trade name: Evolue SP2020)] was used.

(2) Ethylene/α-olefin copolymer (E-2)

As the ethylene/α-olefin copolymer (E-2), an ethylene/1-hexene copolymer commercially available from Prime Polymer Co., Ltd. [MFR = 1.3 g/10 minutes, density = 904 kg/m$^3$, and melt tension = 20 mN (trade name: Evolue SP0510)] was used.

(3) Ethylene/α-olefin copolymer (E-3)

As the ethylene/α-olefin copolymer (E-3), an ethylene/1-hexene copolymer commercially available from Prime Polymer Co., Ltd. [MFR = 2 g/10 minutes, density = 908 kg/m$^3$, and melt tension = 200 mN (trade name: Evolue SP0523A)] was used.

(4) Ethylene/α-olefin copolymer (E-4)

As the ethylene/α-olefin copolymer (E-4), a linear low-density polyethylene commercially available from Prime Polymer Co., Ltd. [MFR = 15 g/10 minutes, density = 914 kg/m3, and melt tension = less than 10 mN (trade name: ULTZEX 15150J)] was used.

The physical properties of the films obtained in Examples and Comparative Examples were measured by the following methods.

[Total haze and external haze]

The total haze was measured in accordance with ASTM D1003. The internal haze was also measured by placing a film in a cell filled with cyclohexanol, and then measurements were performed by using a haze meter in the same manner as in the total haze.

The external haze was calculated using the following formula.

$$\text{External haze} = \text{total haze} - \text{internal haze}$$

[Dart impact strength (dart impact)]

The dart impact strength was measured under the following conditions in accordance with ASTM D1709.
A test piece was tightened by using an air clamp, a dart with a hemispherical diameter was dropped from a certain height, and a load at which the test piece breaks by 50% was read from a graph. The number of drops for one level is 10 times, and the method A is employed.

[Blocking coefficient]

The blocking coefficient was measured according to the following method in accordance with ASTM D1893-67.
A test piece in which two inner surfaces of an inflation film were attached in stacked manner, underwent aging under temperature and load for a predetermined period of time, and it is then set in a blocking measurement jig attached to an Instron-type universal material testing machine. Using the Instron universal material testing machine, the blocking coefficient is defined as a value obtained by dividing force required to separate two blocked test pieces by a width of the test piece.
Measurement temperature: 23°C
Test rate: 200 mm/min.
Test piece: Thickness/width: 40 $\mu$m/200 mm
Aging conditions: 50°C $\times$ 10 kgf $\times$ 3 days

[Heat seal strength development temperature]

After the test pieces in which two inner surfaces of an inflation film were attached in stacked manner, were heat sealed under temperature and load for a predetermined time, the temperature at which force (N/15 mm) required to separate the two heat-sealed test pieces reached 5N/15mm, is defined as a heat seal strength development temperature.
Heat seal pressure: 0.2 MPa
Heat seal time: 1 sec
Test rate: 300 mm/min.
Test piece: Thickness/width: 40 pm/15 mm wide

[Example 1]

Using the above ethylene/$\alpha$-olefin copolymer (A-1), a film with a thickness of 40 $\mu$m and a width of 320 mm was fabricated by the inflation molding machine described below. The physical properties of the obtained film were measured by the measurement method described above.
The results are shown in Table 1.
For the ethylene/$\alpha$-olefin copolymer (A-1), ESQ-4 (SL agent) commercially available from Prime Polymer Co., Ltd. as a slip agent masterbatch, and EAZ-20 (AB agent) commercially available from Prime Polymer Co., Ltd. as an anti-blocking agent masterbatch, were dry blended, mixed, and then used.

<Inflation molding method>

Molding machine: A SHI inflation molding machine manufactured by Modern Machinery Company Inc.

Take-up speed: 20 m/min.
Set temperature: Cylinder 180°C, die 190°C
Extruder size: 50 mm in diameter, L/D=27

Extrusion amount: 28.8 kg/h
Lip gap: 2.0 mm
Swelling ratio: 2.0
Screw type: Barrier flight type

[Example 2 and Comparative Examples 1 to 4]

Each film was fabricated in the same manner as in Example 1 except that the ethylene/α-olefin copolymer (A-2) shown in Table 1, for example, was used in place of the ethylene/α-olefin copolymer (A-1) used in Example 1. The physical properties of the obtained film were measured by the measurement method described above.
The results are shown in Table 1.

[Table 1]

Table 1

| | | | Example 1 | Example 2 | Comparative Example 1 | Comparative Example 2 | Comparative Example 3 | Comparative Example 4 |
|---|---|---|---|---|---|---|---|---|
| | Copolymer | | (A-1) | (A-2) | (E-1) | (E-2) | (E-3) | (E-4) |
| Physical properties | MFR | g/10min | 1.8 | 1.9 | 2.3 | 1.3 | 2 | 15 |
| | Density | kg/m³ | 910 | 910 | 916 | 904 | 908 | 914 |
| | Melt tension | mN | 104 | 83 | 70 | 20 | 200 | Less than 10 |
| Film physical properties | Film thickness | μm | 40 | 40 | 40 | 40 | 40 | 40 μm, film formation impossible |
| | Haze | % | 12 | 6.5 | 6.6 | 4.7 | 36 | |
| | External haze | % | 11 | 5.5 | 5.9 | 4.3 | 35 | |
| | Dart impact | g | 1133 | 1,500 or more | 517 | 1,500 or more | 379 | |
| | Blocking coefficient | mN/cm | 3 | 9 | 2 | 195 | 1 | |
| | Heat seal strength development temperature | °C | 95 | 90 | 110 | 85 | 100 | |
| Addition upon film formation | AB agent | ppm | 2000 | 2000 | 1000 | 6000 | 2000 | |
| | SL agent | ppm | 400 | 400 | 400 | 400 | 400 | |

9

As is clear from Table 1, the film composed of the copolymer with the high density (Comparative Example 1) has low impact resistance and poor low-temperature heat sealability.

The film composed of the copolymer with the melt tension of less than 40 mN (Comparative Example 2) has excellent impact resistance, but poor blocking resistance, presumably due to the extremely low external haze.

The film composed of the copolymer with the melt tension exceeding 190 mN (Comparative Example 3) also has high external haze and favorable blocking resistance, but is poor in impact resistance and low-temperature heat sealability.

In contrast, the films obtained in Example 1 and Example 2 have excellent impact resistance (dart impact), heat seal strength development temperature is low, resulting in excellent low-temperature heat sealability, and is also favorable in transparency (haze) and blocking resistance, which are films with excellent balance between the impact resistance and the blocking resistance.

**Claims**

1. A film comprising an ethylene/α-olefin copolymer (A) having the following requirements (a1), (a2), and (a3):

   (a1): a melt flow rate (MFR) measured at 190°C and a load of 2.16 kg is in a range of 0.1 to 8 g/10 minutes,
   (a2): a density is in a range of 885 to 915 kg/m$^3$, and
   (a3): a melt tension is in a range of 40 to 190 mN.

2. The film according to claim 1, having an external haze of 4.4% or more and less than 15%.

3. The film according to claim 1 or 2, having a film thickness in a range of 0.005 mm to 1 mm.

4. A laminate comprising the film according to claim 1 or 2.

5. A packaging material comprising the film according to claim 1 or 2 or the laminate according to claim 4.

6. A method for producing a film by melt extruding an ethylene/α-olefin copolymer (A) having the following requirements (a1), (a2), and (a3):

   (a1): a melt flow rate (MFR) measured at 190°C and a load of 2.16 kg is in a range of 0.1 to 8 g/10 minutes,
   (a2): a density is in a range of 885 to 915 kg/m$^3$, and
   (a3): a melt tension is in a range of 40 to 190 mN.

## INTERNATIONAL SEARCH REPORT

International application No.

**PCT/JP2022/045790**

### A. CLASSIFICATION OF SUBJECT MATTER

*C08J 5/18*(2006.01)i; *B32B 27/32*(2006.01)i
FI: C08J5/18 CES; B32B27/32 103

According to International Patent Classification (IPC) or to both national classification and IPC

### B. FIELDS SEARCHED

Minimum documentation searched (classification system followed by classification symbols)

C08J5/18; B32B27/32

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2001-054929 A (MITSUI CHEMICALS INC) 27 February 2001 (2001-02-27)<br>entire text, in particular, claims, paragraphs [0117]-[0152] | 1-6 |
| X | JP 2018-154803 A (PRIME POLYMER CO LTD) 04 October 2018 (2018-10-04)<br>entire text, in particular, claims, paragraphs [0026], [0037]-[0050] | 1-6 |
| X | WO 2019/172375 A1 (PRIME POLYMER CO LTD) 12 September 2019 (2019-09-12)<br>entire text, in particular, claims, paragraphs [0021]-[0024], [0041]-[0054] | 1, 3-6 |
| A | JP 2012-031398 A (SUMITOMO CHEMICAL CO LTD) 16 February 2012 (2012-02-16)<br>entire text | 1-6 |
| A | WO 2018/164169 A1 (SUMITOMO CHEMICAL CO LTD) 13 September 2018 (2018-09-13)<br>entire text | 1-6 |

☐ Further documents are listed in the continuation of Box C.  ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 February 2023** | **21 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/045790**

| Patent document cited in search report | | | Publication date (day/month/year) | Patent family member(s) | | | Publication date (day/month/year) |
|---|---|---|---|---|---|---|---|
| JP | 2001-054929 | A | 27 February 2001 | EP 1059326 A2 entire text, in particular, claims, paragraphs [0135]-[0175] NZ 505010 A AU 3794000 A ID 26279 A CN 1277109 A | | | |
| JP | 2018-154803 | A | 04 October 2018 | (Family: none) | | | |
| WO | 2019/172375 | A1 | 12 September 2019 | US 2021/0009794 A1 entire text, in particular, claims, paragraphs [0036]-[0040], [0063]-[0093] CN 111819237 A | | | |
| JP | 2012-031398 | A | 16 February 2012 | WO 2012/002555 A1 CN 102958961 A | | | |
| WO | 2018/164169 | A1 | 13 September 2018 | US 2019/0382515 A1 entire text EP 3594275 A1 CN 110352213 A | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013099927 A
- JP 2013112797 A
- JP 2018178015 A